# EUROPÄISCHE PATENTANMELDUNG

(11) **EP 1 493 668 A2**
(43) Veröffentlichungstag der Anmeldung: **05.01.2005**
(21) Anmeldenummer: 04015434.6
(22) Anmeldetag: 01.07.2004
(51) Int. Cl.: B65B 9/20

(54) **Vertikale Schlauchbeutelmaschine**

(30) Priorität: 04.07.2003 DE 10330294
(71) Anmelder: Rovema Verpackungsmaschinen GmbH, 35463 Fernwald (DE)
(72) Erfinder: Metz, Hartmut, 35325 Mücke (DE); Baur, Walter, Dr., 63584 Gründau (DE)

(57) **Zusammenfassung**

Um bei einer vertikalen Schlauchbeutelmaschine (1) einen ortsgenauen und gleichmäßigen Folienlauf zu erreichen, wird ein Folienabzugssystem vorgeschlagen, das für einen sicheren Einlauf der Ränder (29) einer Folienbahn (3) in eine Längssiegeleinrichtung (7) zum Verschweißen eines Folienschlauches (5) in seiner Transportrichtung (8) sorgt.

Das Folienabzugssystem weist von einem Antrieb (12) angetriebene Rollen (10) auf, die in Transportrichtung (8) gesehen, zwischen der Formschulter (4) und der Längssiegeleinrichtung (7) vorgesehen sind, und ein zusätzlicher Folienabzug (19) mit Antrieb (20) und einem um zwei Räder (21) umlaufenden Riemen (22) vorgesehen, der gegen den Folienschlauch (5) und damit gegen das Füllrohr (6) wirkt, und der an einer Stelle des Folienschlauches (5) wirkt, an der sich nicht die Längsnaht (9) befinden. Die beiden Antriebe (12, 20) sind miteinander synchronisiert.

## Beschreibung

Die Erfindung betrifft eine vertikale Schlauchbeutelmaschine. Derartige Maschinen werden dazu benutzt, um Produkte in Schlauchbeutel zu packen.

Aus der EP 0 917 946 A1 ist eine vertikale Schlauchbeutelmaschine mit einer von einer Vorratsrolle abgewickelten Folienbahn, einer Formschulter zum Umformen der Folienbahn zu einem Folienschlauch, einem vertikal ausgerichteten Füllrohr zum Aufnehmen und Befüllen des Folienschlauches, und einer Längssiegeleinrichtung zum Verschweißen des Folienschlauches parallel zu seiner Transportrichtung bekannt. Bei der Längsverschweißung des Folienschlauches wird eine flossenartige Längsnaht erzeugt. Zwei, mit einem Antrieb versehene Rollen, klemmen die Längsnaht mit ihren Mantelflächen ein und transportieren sie weiter, wodurch der Antrieb zum Weitertransportieren der gesamten Folienbahn und des Folienschlauches dient. Zwei gegeneinander bewegliche Quersiegelbacken dienen einem Verschweißen des Folienschlauches quer zu dessen Transportrichtung und zum Erzeugen von Kopfnähten und Bodennähten an Schlauchbeuteln. Mittels einer Trenneinrichtung wird jeweils ein erzeugter, befüllter Schlauchbeutel vom Folienschlauch getrennt.

Bei dieser bekannten Schlauchbeutelmaschine erfolgt der Folientransport ausschließlich mittels gegeneinander gedrückter Rollen. Dies hat den Nachteil, dass die Folie nur linienförmig, nämlich an der Berührungsstelle der gegeneinander gepressten Mantelflächen der Rollen ergriffen wird. Dieses linienförmige Ergreifen kann zu einer lokalen Dehnung der Folie führen. Zudem ist es ungünstig bezüglich eines Ansetzens einer großen Abzugskraft zum Bewegen der Folienbahn über die Formschulter und zum Aufbringen der Kraft, welche nötig ist, die ebene Folienbahn zu einem Folienschlauch umzuformen. Die Rollen wirken zudem unterhalb und somit nach der Längssiegeleinrichtung, d. h. eine Führungseigenschaft der Rollen in Bezug auf die noch nicht verschweißte Längsnaht ist relativ gering. Die Rollen transportieren in erster Linie die bereits verschweißte Längsnaht weiter. Eine ortsgenaue Führung der unverschweißten Ränder der Folienbahn in die Längssiegeleinrichtung hinein kommt nicht vor.

Alternativ zu dieser Art des Folientransports ist ein Folienabzug bekannt, der zwei um jeweils zwei Räder umlaufende Riemen aufweist, die auf gegenüberliegenden Seiten des Füllrohres gegen den Folienschlauch wirken. Durch die große Angriffsfläche der Riemen wird die Abzugskraft gleichmäßig und damit folienschonend auf den Folienschlauch ausgeübt. Dieser Folienabzug hat jedoch den Nachteil, dass er keine Führungsfunktion auf den Bereich der Längsnaht ausübt. Eine ungenau geführte Längsnaht kann zu einer ungenügenden Überlappung der Ränder der Folienbahn und damit zu undichten Schlauchbeuteln führen.

Der Erfindung liegt die Aufgabe zugrunde, eine Schlauchbeutelmaschine der eingangs beschriebenen Art dahingehend weiterzubilden, dass die zu verschweißenden Ränder der Folienbahn besonders ortsgenau geführt werden, währenddessen der Folientransport in folienschonender Weise erfolgt.

Gelöst ist die Aufgabe gemäß dem kennzeichnenden Teil des Anspruchs 1. Danach sind die Rollen, die einem Weitertransport der Ränder der Folienbahn dienen, in Transportrichtung gesehen, zwischen der Formschulter und der Längssiegeleinrichtung vorgesehen, und ein zusätzlicher Folienabzug mit Antrieb und einem um zwei Räder umlaufenden Riemen wirkt, gegen den Folienschlauch und damit gegen das Füllrohr, und zwar an einer Stelle des Folienschlauches, an der sich die Längsnaht nicht befindet. Darüber hinaus sind die beiden Antriebe miteinander synchronisiert.

Die Erfindung hat den Vorteil, dass die Ränder der Folienbahn relativ ortsgenau geführt werden, da die Rollen relativ nahe an der Formschulter gelegen sind. Dadurch werden die noch unverschweißten Ränder im Zustand eines sicheren Aufeinanderliegens der Längssiegeleinrichtung zugeführt. Eine undichte Längsnaht wird somit sehr unwahrscheinlich. Ein weiterer Vorteil ist, dass der Folientransport in folienschondender Weise erfolgt, da der Folienschlauch sowohl von den Rollen als auch vom zusätzlichen Folienabzug ausgeführt wird, wodurch die Folienfläche, auf die der Folienabzug wirkt, verhältnismäßig groß ist. Zur Flächenvergrößerung trägt insbesondere der relativ breite Riemen des zusätzlichen Folienabzuges bei. Eine lokale Dehnung der Folie kommt somit nicht vor. Die Flächenvergrößerung ist zudem von Vorteil, um eine relativ große Abzugskraft an der Folienbahn anzusetzen.

Vorteilhafte Ausgestaltungen der vorgeschlagenen Schlauchbeutelmaschine sind in den Ansprüchen 2 bis 4 beschrieben.

Eine besonders große Fläche zum Ansetzen einer Abzugskraft ist erreicht, wenn gemäß Anspruch 2 der Folienabzug zwei um jeweils zwei Räder umlaufende Riemen aufweist, die auf gegenüberliegenden Seiten gegen den Folienschlauch wirken. Hierbei sind zudem die Folienschonung und der genaue Folienlauf weiter verbessert.

Es können Schlauchbeutel mit beutelstabilisierenden Seitennähten hergestellt werden, wenn analog Anspruch 3 auf der Längsnaht gegenüberliegenden Seite des Folienschlauches im Folienschlauch eine Flosse ausgeformt ist, gegen die eine weitere Schweißeinrichtung wirkt, um die Flosse zu verschweißen. Dann bilden die Längsnaht und diese Flosse die beiden Seitennähte.

Wird das Füllrohr, durch welches eine Beutelbefüllung erfolgt, aus zwei in Transportrichtung sich erstreckenden Rinnen gebildet, und ist der Abstand zwischen den Rinnen mittels einer Abstandsfixierung einstellbar (Anspruch 4), so kann durch eine Abstandsveränderung eine Füllrohrverbreiterung bzw. -verschmälerung erfolgen. Derart können unterschiedliche breite Schlauchbeutel erzeugt werden.

Im folgenden wird die Erfindung an Hand ein Ausführungsbeispiel darstellender Figuren näher erläutert. Es zeigt:

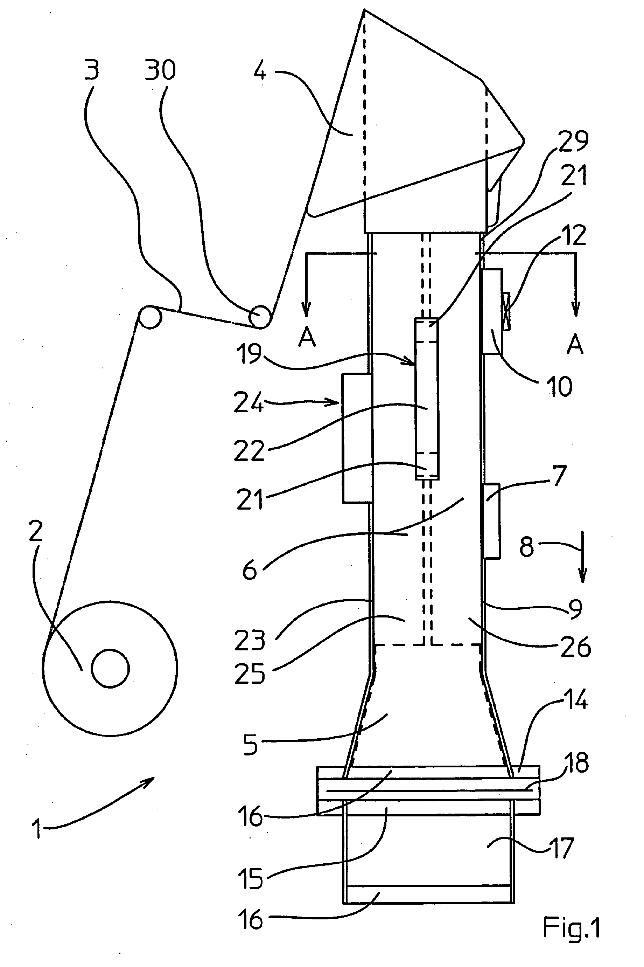

- Figur 1: in einer Seitenansicht eine vertikale Schlauchbeutelmaschine mit zwei die Ränder einer Folienbahn in eine Längssiegeleinrichtung hineinführenden, angetriebenen Rollen, welche direkt unterhalb einer Formschulter vorgesehen sind, und wobei zwei auf gegenüberliegenden Seiten eines Füllrohres gelegene, angetriebene, umlaufende Riemen zusätzlich einem Folientransport dienen;

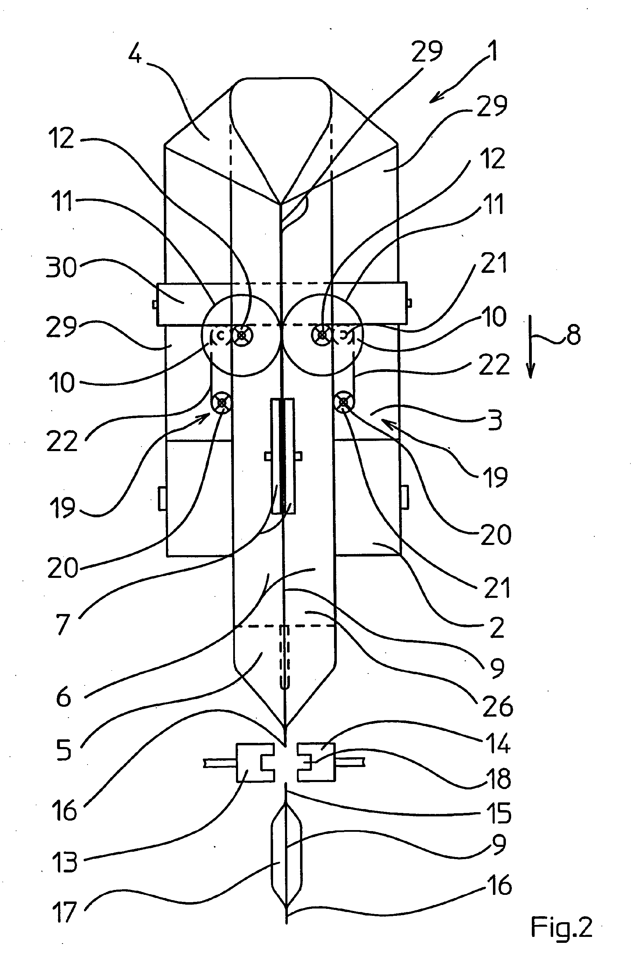

- Figur 2: in einer Seitenansicht den um 90 Grad gedrehten Gegenstand der Figur 1, sowie

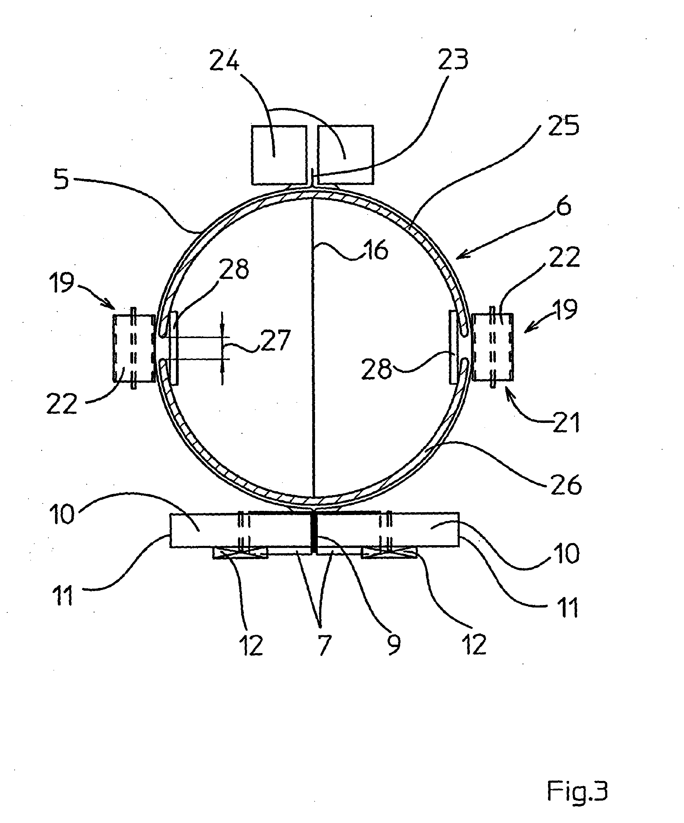

- Figur 3: in einem Schnitt entlang A-A der Figur 1 einen Teil des Gegenstandes der Figur 1.

Bei einer vertikalen Schlauchbeutelmaschine 1 mit einer von einer Vorratsrolle 2 über eine Umlenkrolle 30 abgewickelten Folienbahn 3 dient eine Formschulter 4 zum Umformen der Folienbahn 3 zu einem Folienschlauche 5. Ein vertikal ausgerichtetes Füllrohr 6 ist zum Aufnehmen und Befüllen des Folienschlauches 5 vorgesehen. Eine Längssiegeleinrichtung 7 dient zum Verschweißen des Folienschlauches 5 parallel zu seiner Transportrichtung 8, um eine flossenartige Längsnaht 9 zu erzeugen. Zwei mit einem Antrieb 12 versehene Rollen 10, klemmen die Längsnaht 9 mit ihren Mantelflächen 11 ein, um sie weiterzutransportieren. Der Antrieb 12 ist somit auch zum Weitertransportieren der Folienbahn 3 und des Folienschlauches 5 vorgesehen. Zwei gegeneinander bewegliche Quersiegelbacken 13, 14 dienen zum Verschweißen des Folienschlauches 5 quer zur Transportrichtung 8 und zum Erzeugen von Kopfnähten 15 und Bodennähten 16 an Schlauchbeuteln 17. Mittels einer Trenneinrichtung 18 wird ein erzeugter Schlauchbeutel 17 vom Folienschlauch 5 abgetrennt. Die Rollen 10 befinden sich, in Transportrichtung 8 gesehen, zwischen der Formschulter 4 und der Längssiegeleinrichtung 7, wodurch die Ränder 29 der Folienbahn 3 ortsgenau in die Längssfegeleinrichtung 7 geführt werden. Ein zusätzlicher Folienabzug 19 mit Antrieb 20 ist dazu vorgesehen, eine zusätzliche Abzugskraft auszuüben. Dieser Folienabzug 19 wirkt gegen den Folienschlauch 5 und gegen das Füllrohr 6, und damit an einer Stelle des Folienschlauches 5, an der sich nicht die Längsnaht 9 befindet. Die beiden Antriebe 12, 20 sind miteinander synchronisiert und haben daher eine identische Abzugsgeschwindigkeit.

Der zusätzliche Folienabzug 19 weist zwei um jeweils zwei Räder 21 umlaufende Riemen 22 auf, die auf gegenüberliegenden Seiten gegen den Folienschlauch 5 wirken. Der zusätzliche Folienabzug 19 wirkt somit quer zur Richtung der Krafteinbringung des ersten, durch die Rollen 10 gebildeten Folienabzuges. Zudem liegen die deformierbaren Riemen 22 mit jeweils einem Parallelabschnitt flächig am Folienschlauch 5 an und dienen derart, zusammen mit den Rollen 10 einem gleichmäßigen Ansetzen von Abzugskräften am Folienschlauch 5, wodurch die Ränder 29 zusätzlich eine noch genauere Bewegungsrichtung erhalten. Auf einer der Längsnaht 9 gegenüberliegenden Seite des Folienschlauches 5 ist im Folienschlauch 5 eine Flosse 23 ausgeformt, gegen die eine Schweißeinrichtung 24 wirkt, um die Flosse 23 zu verschweißen. An dieser Flosse 23 ist kein die Flosse 23 ergreifender Folienabzug nötig. Die Folienbahn 3 hat aufgrund der Rollen 10 und des Folienabzuges 19 eine derart gute Richtungsstabilität, dass die Flosse 23 korrekt ausgebildet wird. Die Flosse 23 und die Längsnaht dienen als stabilisierende Seitennähte des Schlauchbeutels 17.

Das Füllrohr 6 wird aus zwei in Transportrichtung 8 sich erstreckenden Rinnen 25, 26 gebildet. Der Abstand 27 zwischen den Rinnen 25, 26 ist mittels einer Abstandsfixierung 28 einstellbar, um nach einem Folienwechsel Schlauchbeutel 17 mit geänderter Beutelbreite herstellen zu können.
- 1: Schlauchbeutelmaschine
- 2: Vorratsrolle
- 3: Folienbahn
- 4: Formschulter
- 5: Folienschlauch
- 6: Füllrohr
- 7: Längssiegeleinrichtung
- 8: Transportrichtung
- 9: Längsnaht
- 10: Rolle
- 11: Mantelfläche
- 12: Antrieb
- 13, 14: Quersiegelbacke
- 15: Kopfnaht
- 16: Bodennaht
- 17: Schlauchbeutel
- 18: Trenneinrichtung
- 19: Folienabzug
- 20: Antrieb
- 21: Rad
- 22: Riemen
- 23: Flosse
- 24: Schweißeinrichtung
- 25, 26: Rinne
- 27: Abstand
- 28: Abstandsfixierung
- 29: Rand
- 30: Umlenkrolle

## Patentansprüche

1. Vertikale Schlauchbeutelmaschine (1) mit einer von einer Vorratsrolle (2) abgewickelten Folienbahn (3), einer Formschulter (4) zum Umformen der Folienbahn (3) zu einem Folienschlauch (5), einem vertikal ausgerichteten Füllrohr (6) zum Aufnehmen und Befüllen des Folienschlauches (5), einer Längssiegeleinrichtung (7) zum Verschweißen des Folienschlauches (5) parallel zu seiner Transportrichtung (8), um eine flossenartige Längsnaht (9) zu erzeugen, zwei mit einem Antrieb (12) versehene Rollen (10), welche die Längsnaht (9) mit ihren Mantelflächen (11) einklemmen und weitertransportieren, wodurch der Antrieb (12) zum Weitertransportieren der Folienbahn (3) und des Folienschlauches (5) dient, zwei gegeneinander beweglichen Quersiegelbacken (13, 14) zum Verschweißen des Folienschlauches (5) quer zur Transportrichtung (8) und zum Erzeugen von Kopfnähten (15) und Bodennähten (16) an Schlauchbeuteln (17), sowie einer Trenneinrichtung (18) zum Abtrennen eines erzeugten Schlauchbeutels (17) vom Folienschlauch (5), **dadurch gekennzeichnet, dass** die Rollen (10), in Transportrichtung (8) gesehen, zwischen der Formschulter (4) und der Längssiegeleinrichtung (7) vorgesehen sind, und dass ein zusätzlicher Folienabzug (19) mit Antrieb (20) und einem um zwei Räder (21) umlaufenden Riemen (22) vorgesehen ist, der gegen den Folienschlauch (5) und damit gegen das Füllrohr (6) wirkt, und der an einer Stelle des Folienschlauches (5) wirkt, an der sich nicht die Längsnaht (9) befindet, wobei die beiden Antriebe (12, 20) synchronisiert sind.

2. Schlauchbeutelmaschine nach Anspruch 1, **dadurch gekennzeichnet, dass** der Folienabzug (19) zwei um jeweils zwei Räder (21) umlaufende Riemen (22) aufweist, die auf gegenüberliegenden Seiten gegen den Folienschlauch (5) wirken.

3. Schlauchbeutelmaschine nach Anspruch 1 oder Anspruch 2, **dadurch gekennzeichnet, dass** auf einer der Längsnaht (9) gegenüberliegenden Seite des Folienschlauches (5) im Folienschlauch (5) eine Flosse (23) ausgeformt ist, gegen die eine Schweißeinrichtung (24) wirkt, um die Flosse (23) zu verschweißen.

4. Schlauchbeutelmaschine nach Anspruch 1, Anspruch 2 oder Anspruch 3, **dadurch gekennzeichnet, dass** das Füllrohr (6) aus zwei in Transportrichtung (8) sich erstreckenden Rinnen (25, 26) gebildet wird, und der Abstand (27) zwischen den Rinnen (25, 26) mittels einer Abstandsfixierung (28) einstellbar ist.
